# EUROPEAN PATENT APPLICATION

(11) **EP 4 772 697 A1**
(43) Date of publication of application: **08.07.2026**
(21) Application number: 24860139.5
(22) Date of filing: 03.07.2024
(51) Int. Cl.: D21H 27/10, D21H 13/08, D21H 11/00, D21H 13/12, D21H 13/24, D21H 23/24, D21H 19/20

(54) **PACKAGING MATERIAL FOR ORAL POUCH, ORAL POUCH MANUFACTURED USING SAME, AND MANUFACTURING METHOD OF PACKAGING MATERIAL FOR ORAL POUCH**

(30) Priority: 31.08.2023 KR 20230115722
(71) Applicant: KT&G Corporation, Daedeok-gu Daejeon 34337 (KR)
(72) Inventor: CHA, Sung Je, Daejeon 34128 (KR); KI, Sung Jong, Daejeon 34128 (KR); JEOUNG, Eun Mi, Daejeon 34128 (KR); SHIN, Jun Won, Daejeon 34128 (KR)
(74) Representative: Ter Meer Steinmeister & Partner
(86) International application number: PCT/KR2024/009371
(87) International publication number: WO 2025/048215

(57) **Abstract**

The present invention relates to a packaging material for an oral pouch, an oral pouch manufactured using same, and a manufacturing method of a packaging material for an oral pouch. One aspect of the present invention provides a packaging material for an oral pouch, the packaging material comprising: 0 to 40 wt% of a cellulose-based staple fiber; 20 to 80 wt% of a pulp fiber; 20 to 60 wt% ofa thermoplastic resin fiber; and 0 to 5 wt% of a binder, and being manufactured by a wet method.

## Description

### TECHNICAL FIELD

One or more embodiments relate to an oral pouch packaging material, an oral pouch manufactured using the oral pouch packaging material, and a method of preparing the oral pouch packaging material.

### BACKGROUND ART

A product for oral use in the form of a pouch, such as snus, generally includes an inner filling material and an outer packaging material for packaging. Nonwoven may be mainly used as an outer packaging material and may be manufactured by web forming and web bonding processes. Web formation methods of a nonwoven are known as dry, wet, and spinning methods. The dry method may include carding and airlay methods, the wet method may be general paper manufacturing methods, and the spinning method may be further divided into a spunbond method and a melt blown method. Web bonding methods include needle punching and spunlacing, which are mechanical bonding methods, and polymer dispersion and polymer solution methods, which are chemical bonding methods. Calendering, hot air, and ultrasonic wave methods are known as thermal bonding methods.

An outer packaging material of an oral pouch needs to basically be a soft material for use in the mouth, needs to have excellent airtightness to prevent a filling material from leaking from a pouch, and needs to have excellent porosity associated with moisture migration characteristics for rapid elution of active ingredients from a filler by saliva. In addition, to prevent a pouch from bursting while the pouch is used in the mouth of a user, a pouch packaging material requires excellent tensile strength, excellent elongation, and sufficient seal strength.

### DISCLOSURE OF THE INVENTION / TECHNICAL GOALS

One or more embodiments provide a packaging material and a method of preparing the same that may ensure characteristics required for a material of a pouch for oral use.

However, goals to be achieved are not limited to those described above, and other goals not mentioned above can be clearly understood by one of ordinary skill in the art from the following description.

### TECHNICAL SOLUTIONS

According to an embodiment, there is provided an oral pouch packaging material including 0% by weight (wt%) to 40 wt% of a cellulose-based staple fiber, 20 wt% to 80 wt% of a pulp fiber, 20 wt% to 60 wt% of a thermoplastic resin fiber, and 0 wt% to 5 wt% of a binder, and prepared by a wet method.

The cellulose-based staple fiber may include at least one of viscose and lyocell.

The pulp fiber may include at least one of soft pulp and hard pulp.

The thermoplastic resin fiber may include at least one of polypropylene (PP), polyethylene (PE), PE/ PP, polyethylene terephthalate (PET), low-melting point polyethylene terephthalate (LMPET), and polylactic acid (PLA).

The thermoplastic resin fiber may be a dual component fiber including two of PP, PE, PET, and PLA. The thermoplastic resin fiber may have a core-shell structure.

The binder may include at least one of an acrylic binder, PLA, polybutylene succinate (PBS), polyhydroxyalkanoates (PHA), a vinyl acetate copolymer, a vinyl acrylic copolymer, a styrenebutadiene copolymer, and a natural material derived from plants.

The oral pouch packaging material may have a tensile strength of 0.4 newtons per millimeter (N/mm) to 2 N/mm, an elongation of 1% to 10%, a porosity of 10,000 Cooperation Center for Scientific Research Relative to Tobacco (CORESTA) unit (CU) to 70,000 CU, and an airtightness of 0 milligrams (mg) to 60 mg.

The oral pouch packaging material may have a basis weight of 10 to 50 grams per square meter (g/m²) and a thickness of 50 micrometers (µm) to 300 µm.

The cellulose-based staple fiber may be rayon and in an amount of 15 to 25 wt%, the pulp fiber may be soft pulp and in an amount of 35 to 45 wt%, and the thermoplastic resin fiber may be LMPET or PE/PP and in an amount of 35 to 45 wt%.

According to another aspect, there is provided an oral pouch including the oral pouch packaging material described above.

According to another aspect, there is provided a method of preparing an oral pouch packaging material, the method including step S1 of beating a pulp fiber, step S2 of forming a web by mixing the beaten pulp fiber, a cellulose fiber, thermoplastic resin fiber, and step S3 of performing dehydration and drying.

The method may further include adding a binder.

The adding of the binder may be applied by size pressing during step S3, or applied by a coating method after step S3.

Additional aspects of embodiments will be set forth in part in the description which follows and, in part, will be apparent from the description, or may be learned by practice of the disclosure.

### EFFECTS OF THE INVENTION

According to embodiments, an oral pouch packaging material that is excellent in a porosity, an airtightness, a tensile strength, and an elongation, and that has an enhanced seal strength, based on a combination of a cellulose-based staple fiber, a pulp fiber, and a thermoplastic resin fiber may be provided.

It should be understood that the effects of the present disclosure are not limited to the above-described effects, but are construed as including all effects that can be inferred from the configurations and features described in the following description or claims of the present disclosure.

### BRIEF DESCRIPTION OF THE DRAWING

These and/or other aspects, features, and advantages of the invention will become apparent and more readily appreciated from the following description of embodiments, taken in conjunction with the accompanying drawing of which:

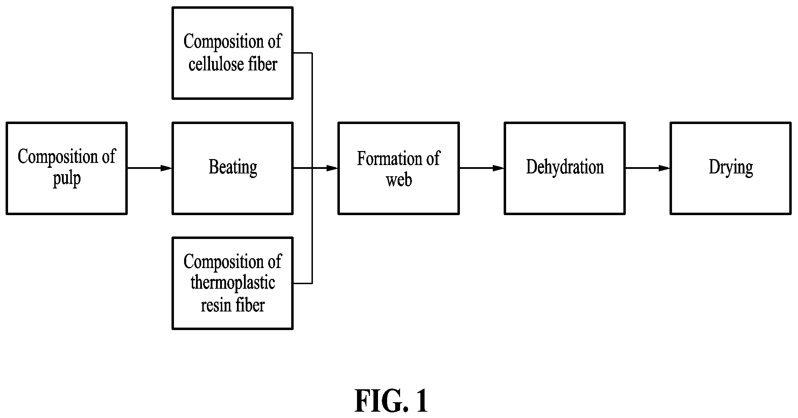

FIG. 1 is a diagram schematically illustrating a method of preparing an oral pouch packaging material according to an embodiment.

### BEST MODE FOR CARRYING OUT THE INVENTION

Hereinafter, embodiments will be described in detail with reference to the accompanying drawing. However, various alterations and modifications may be made to the embodiments. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not intended to be limiting. The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawing, like reference numerals refer to like components and a repeated description related thereto will be omitted. In the description of embodiments, detailed description of well-known related structures or functions will be omitted when it is deemed that such description will cause ambiguous interpretation of the present disclosure.

According to an embodiment, an oral pouch packaging material may be provided. The oral pouch packaging material may include 0% by weight (wt%) to 40 wt% of a cellulose-based staple fiber, 20 wt% to 80 wt% of a pulp fiber, 20 wt% to 60 wt% of a thermoplastic resin fiber, and 0 wt% to 5 wt% of a binder, and may be prepared by a wet method.

The cellulose-based staple fiber, which is a hydrophilic material, may be soft, and may have an excellent moisture absorption and a low elasticity, to have an advantage in manufacturing workability.

The cellulose-based staple fiber may include, for example, at least one of viscose or lyocell. Desirably, the cellulose-based staple fiber may be rayon.

The cellulose-based staple fiber may desirably be in an amount of 10 wt% to 35 wt%, and more desirably in an amount of 15 wt% to 30 wt%, based on a total weight of the oral pouch packaging material.

If the amount of the cellulose-based staple fiber is less than the lower limit, moisture migration characteristics may decrease due to a failure to form a sufficiently large number of pores in the oral pouch packaging material, thereby reducing an elution rate of an active ingredient of a filler. If the amount of the cellulose-based staple fiber exceeds the upper limit, a tensile strength of the oral pouch packaging material may decrease, which may cause a manufacturing workability of a pouch to be reduced or cause the filler to leak during a manufacturing of a pouch or during an oral use of the pouch.

The pulp fiber may be pulp that uses, as raw materials, softwood and broadleaf trees for a manufacturing of general paper, and a strength of a material may be adjusted by selecting the above pulp and adjusting a beating level during a manufacturing of paper.

The pulp fiber may include, for example, at least one of soft pulp and hard pulp. Desirably, the pulp fiber may be soft pulp.

Since the soft pulp has a relatively long fiber length in comparison to hard pulp, the soft pulp may be desirably in terms of high tensile strength, low opacity during the manufacturing of paper, and good beating efficiency.

The pulp fiber may desirably be in an amount of 30 wt% to 55 wt%, and more desirably, in an amount of 35 wt% to 50 wt%, based on the total weight of the oral pouch packaging material.

If the amount of the pulp fiber is less than the lower limit, the tensile strength of the oral pouch packaging material may decrease, which may result in a bursting of a pouch. If the amount of the pulp fiber exceeds the upper limit, the porosity of the material may decrease, and the moisture migration characteristics during use of the pouch may be reduced.

The thermoplastic resin fiber may be at least one of polypropylene (PP), polyethylene (PE), PE/PP, polyethylene terephthalate (PET), low-melting point polyethylene terephthalate (LMPET), and polylactic acid (PLA).

Desirably, the thermoplastic resin fiber may be LMPET.

When LMPET is used, the tensile strength and elongation of the oral pouch packaging material may increase.

Alternatively, the thermoplastic resin fiber may be a dual component fiber including two of PP, PE, PET, and PLA, and may form a core-shell structure. Such a fiber with the core-shell structure may be excellent in physical characteristics and sealing characteristics at a low temperature.

The thermoplastic resin fiber may be desirably in an amount of 25 wt% to 55 wt%, and more desirably, in an amount of 30 wt% to 50 wt%, based on the total weight of the oral pouch packaging material.

If the amount of the thermoplastic resin fiber is less than the lower limit, an internal filler may leak out during use of a pouch due to a failure to ensure a sufficient seal strength in the packaging material, and packaging itself during manufacturing may be impossible. If the amount of the thermoplastic resin fiber exceeds the upper limit, may increase, the material itself may become stiff although an adhesive strength of the packaging material increases, which may result in an increase in a foreign body sensation in the mouth.

The binder may be at least one of an acrylic binder, PLA, polybutylene succinate (PBS), polyhydroxyalkanoates (PHA), a vinyl acetate copolymer, a vinyl acrylic copolymer, a styrenebutadiene copolymer, and a natural material derived from plants.

Desirably, the binder may be an acrylic binder.

The binder may be selectively applicable to increase a strength of a material and a seal strength.

Desirably, the cellulose-based staple fiber may be rayon and in an amount of 15 to 25 wt%, the pulp fiber may be soft pulp and in an amount of 35 to 45 wt%, and the thermoplastic resin fiber may be LMPET or PE/PP and in an amount of 35 to 45 wt%.

The oral pouch packaging material may have a tensile strength of 0.4 newtons per millimeter (N/mm) to 2 N/mm, an elongation of 1% to 10%, a porosity of 10,000 Cooperation Center for Scientific Research Relative to Tobacco (CORESTA) unit (CU) to 70,000 CU, and an airtightness of 0 milligrams (mg) to 60 mg.

Desirably, the porosity may range from 30,000 CU to 70,000 CU.

Desirably, the airtightness may range from 10 mg to 60 mg.

If the tensile strength and the elongation are less than the lower limits, a pouch may burst when the pouch is used in the mouth of a user. If the porosity is less than the lower limit, moisture migration characteristics may decrease, which may lead to a negative result, for example, inhibition of elution of an active ingredient from a filler by saliva. In addition, if the airtightness exceeds the upper limit, a filler may leak from a pouch.

The oral pouch packaging material may have a basis weight of 10 to 50 grams per square meter (g/m²), and desirably have a basis weight of 20 to 40 g/m².

The basis weight may be a weight per area. If the basis weight of the oral pouch packaging material exceeds the upper limit, a strength of a pouch may increase, but moisture migration characteristics may decrease. If the basis weight is less than the lower limit, the moisture migration characteristics may be enhanced, but the strength of the pouch may decrease.

The oral pouch packaging material may have a thickness of 50 µm to 300 µm, and desirably have a thickness of 50 to 150 µm.

If the thickness of the oral pouch packaging material is less than the numerical range described above, an oral pouch may easily burst due to a decrease in a strength of the oral pouch. On the other hand, if the thickness of the oral pouch packaging material exceeds the numerical range described above, the strength of the oral pouch may increase, but the moisture migration characteristics may decrease.

According to an embodiment, an oral pouch including the oral pouch packaging material described above may be provided.

According to an embodiment, a method of preparing an oral pouch packaging material may be provided. The method may include step S1 of beating a pulp fiber, step S2 of forming a web by mixing the beaten pulp fiber, a cellulose fiber, thermoplastic resin fiber, and step S3 of performing dehydration and drying.

In the present disclosure, a wet nonwoven preparation method may be used to prepare a pouch packaging material. The wet nonwoven preparation method may be advantageous in a preparation of a low-basis weight pouch packaging material, due to an advantage of excellent airtightness even at a thin thickness.

The order of the method of preparing the oral pouch packaging material is schematically illustrated in FIG. 1. Although not separately shown in FIG. 1, the method may further include adding a binder.

The adding of the binder may be applied by size pressing during step S3, or applied by a coating method after step S3.

The size pressing, which is an external sizing method, may be a process of coating a surface during a preparation of a packaging material, and may be used to provide, in particular, water resistance of a packaging material.

Hereinafter, the present disclosure will be described in more detail based on examples. The following examples are described for the purpose of illustrating the present disclosure and are not intended to limit the scope of the present disclosure.

### Example

### <Preparation Example 1>

An oral pouch packaging material was prepared using a wet preparation method, based on fiber compositions of Examples 1 to 9 and Comparative Example 1 shown in Table 1 below.

A nonwoven with a basis weight of about 35 g/m² was prepared.

**[Table 1]**

| | Cellulose-based staple fiber | Pulp fiber | Thermoplastic resin fiber | Binder |
|---|---|---|---|---|
| Example 1 | - | 40 parts by weight of soft pulp | 60 parts by weight of PE/PP | - |
| Example 2 | - | 60 parts by weight of soft pulp | 40 parts by weight of PE/PP | - |
| Example 3 | - | 80 parts by weight of soft pulp | 20 parts by weight of PE/PP | - |
| Example 4 | - | 60 parts by weight of soft pulp | 40 parts by weight of PP | - |
| Example 5 | - | 60 parts by weight of soft pulp | 40 parts by weight of LMPET | - |
| Example 6 | 20 parts by weight of rayon | 40 parts by weight of soft pulp | 40 parts by weight of PE/PP | - |
| Example 7 | 40 parts by weight of rayon | 20 parts by weight of soft pulp | 40 parts by weight of PE/PP | - |
| Example 8 | 30 parts by weight of rayon | 30 parts by weight of soft pulp | 40 parts by weight of PE/PP | - |
| Example 9 | 30 parts by weight of rayon | 30 parts by weight of soft pulp | 40 parts by weight of PE/PP | 5 parts by weight of acrylic binder |
| Comparative Example 1 | - | 100 parts by weight of soft pulp | - | - |

### <Preparation Example 2>

An oral pouch packaging material was prepared using a wet preparation method, based on fiber compositions of Examples 10 to 14 shown in Table 2 below. The oral pouch packaging material was prepared in the same manner as in Preparation Example 1, except that the basis weight of the nonwoven was about 25 g/m².

**[Table 2]**

| | Cellulose-based staple fiber | Pulp fiber | Thermoplastic resin fiber | Binder |
|---|---|---|---|---|
| Example 10 | 20 wt% of rayon | 40 wt% of soft pulp | 40 wt% of PE/PP | - |
| Example 11 | 20 wt% of rayon | 40 wt% of soft pulp | 40 wt% of LMPET | - |
| Example 12 | 20 wt% of rayon | 50 wt% of soft pulp | 30 wt% of PE/PP | - |
| Example 13 | 10 wt% of rayon | 50 wt% of soft pulp | 40 wt% of PE/PP | - |
| Example 14 | 15 wt% of rayon | 50 wt% of soft pulp | 30 wt% of PE/PP | 5 wt% of acrylic binder |

### <Test Example 1> Determination of Proportion of Thermoplastic Resin Fiber to Ensure Sealing Characteristics of Packaging Material

To determine an optimal fiber composition for a preparation of an oral pouch packaging material, a tensile strength, an elongation, a porosity, an airtightness, and a seal strength of each of the oral pouch packaging materials prepared in Preparation Examples 1 and 2 were measured.

The prepared packaging material was cut into a size of 15 mm in width and at least 20 mm in length, and the tensile strength and the elongation were measured using an EDANA NWEP 110.1.R10 measurement method.

The prepared packaging material was cut to an appropriate size, and the porosity was measured using an ISO 2965 measurement method.

The prepared packaging material was placed between an upper circular sieve with a diameter of 21 cm, 10 mesh, and an aperture of 2 mm and a lower circular sieve with a diameter of 21 cm, 12 mesh, and an aperture of 1.7 mm, 40 g of a granular filler (an average particle size of 250 µm) was placed on the upper circular sieve, shaking was performed at 240 rpm for 5 minutes, and a weight of the filler remaining under the lower sieve was measured, to evaluate the airtightness.

Two sheets of the prepared packaging material were cut into a size of 15 mm in width and at least 20 mm in length, a transverse end was sealed to a width of 2 mm at 150°C for 2 seconds using a manual heat sealer, and a tensile strength evaluation method was applied, to measure the sealing strength.

To determine the proportion of the thermoplastic resin fiber to ensure the sealing characteristics of the packaging material, the results for measured physical characteristics of each of packaging materials of Examples 1 to 3 and Comparative Example 1 are shown in Table 3 below.

**[Table 3]**

| | Physical characteristics | | | | |
|---|---|---|---|---|---|
| | Tensile strength (N/mm) | Elongation (%) | Porosity (CU) | Airtightness (mg) | Seal strength (N/mm) |
| Example 1 | 0.17 | 4.0 | 50K or greater | 555 | Unmeasurable |
| Example 2 | 0.44 | 1.8 | 18764 | 22 | 0.23 |
| Example 3 | 1.18 | 2.3 | 6046 | 11 | 0.04 |
| Comparative Example 1 | 1.99 | 2.4 | 1707 | 20 | Failed in sealing |

Referring to Table 3, it may be found that it is possible to ensure sealing characteristics only when at least 20 wt% of the thermoplastic resin fiber (PE/PP) is included. When the amount of the thermoplastic resin fiber is greater than 60 wt%, measurement of a sealing strength was impossible because the sealing strength was greater than a tensile strength of a material.

Thus, it can be confirmed that it is possible to ensure sealing characteristics by properly adjusting a proportion of a thermoplastic resin fiber according to a target tensile strength level of a packaging material.

### <Test Example 2> Evaluation of Physical Characteristics of Packaging Material according to Types of Thermoplastic Resin Fiber

To evaluate physical characteristics of a packaging material according to types of thermoplastic resin fibers, values of physical characteristics of each of packaging materials of Examples 2, 4, and 5 were measured in the same manner as in Test Example 1.

**[Table 4]**

| | Physical characteristics | | | | |
|---|---|---|---|---|---|
| | Tensile strength (N/mm) | Elongation (%) | Porosity (CU) | Airtightness (mg) | Seal strength (N/mm) |
| Example 2 | 0.44 | 1.8 | 18764 | 22 | 0.23 |
| Example 4 | 0.49 | 1.9 | 21618 | 13 | 0.34 |
| Example 5 | 0.99 | 7.8 | 15862 | 10 | 0.10 |

Referring to Table 4, it may be confirmed that the tensile strength and elongation significantly increased when an LMPET fiber was applied, although differences in the tensile strength, elongation, and porosity between a packaging material including a PE/PP fiber and a packaging material including a PP fiber were not great. Although a relatively low seal strength was measured when the LMPET fiber was used, the seal strength may be adjusted by adjusting an appropriate ratio.

### <Test Example 3> Evaluation of Physical Characteristics of Packaging Material according to Application of Rayon

To evaluate physical characteristics of a packing material with an applied cellulose-based staple fiber, values of physical characteristics of each of packaging materials of Examples 2, 6, and 7 were measured in the same manner as in Test Example 1.

**[Table 5]**

| | Physical characteristics | | | | |
|---|---|---|---|---|---|
| | Tensile strength (N/mm) | Elongation (%) | Porosity (CU) | Airtightness (mg) | Seal strength (N/mm) |
| Example 2 | 0.44 | 1.8 | 18764 | 22 | 0.23 |
| Example 6 | 0.35 | 1.5 | 50K or greater | 23 | 0.23 |
| Example 7 | 0.14 | 0.7 | 50K or greater | 45 | 0.09 |

Referring to Table 5, it may be confirmed that the porosity significantly increased when the cellulose-based staple fiber (rayon) was applied. The airtightness was evaluated at similar levels. However, when 40 wt% of rayon was included, the tensile strength and seal strength were reduced. Thus, there is a need to properly adjust a proportion of the rayon based on target physical properties.

### <Test Example 4> Evaluation of Physical Characteristics of Packaging Material according to Selective Use of Binder

To evaluate physical characteristics of a packaging material prepared using a binder, values of physical characteristics of each of packaging materials of Examples 8 and 9 were measured in the same manner as in Test Example 1.

**[Table 6]**

| | Physical characteristics | | | | |
|---|---|---|---|---|---|
| | Tensile strength (N/mm) | Elongation (%) | Porosity (CU) | Airtightness (mg) | Seal strength (N/mm) |
| Example 8 | 0.20 | 1.13 | 42157 | 12 | 0.25 |
| Example 9 | 1.00 | 4.16 | 33744 | 15 | 0.33 |

Referring to Table 6, it may be confirmed that a tensile strength, elongation, and seal strength of a packaging material prepared by selectively using an acrylic binder all increased.

### <Test Example 5> Physical Characteristics according to Composition of Packaging Material

Based on all the results of Test Example 1, it may be interpreted that the cellulose-based staple fiber functions to assign a porosity of a material, that the pulp fiber functions to increase the tensile strength, and that the thermoplastic resin fiber functions to assign sealing characteristics.

In Preparation Example 2, the oral pouch packaging material in which a fiber mixing ratio was appropriately adjusted was prepared based on the above-described characteristics. In Test Example 5, to evaluate physical characteristics of the oral pouch packaging material prepared in Preparation Example 2, values of the physical characteristics were measured in the same manner as in Test Example 1.

**[Table 7]**

| | Physical characteristics | | | | |
|---|---|---|---|---|---|
| | Tensile strength (N/mm) | Elongation (%) | Porosity (CU) | Airtightness (mg) | Seal strength (N/mm) |
| Example 10 | 0.16 | 1.1 | 48061 | 15 | 0.15 |
| Example 11 | 0.45 | 2.2 | 43687 | 39 | 0.22 |
| Example 12 | 0.26 | 1.2 | 38033 | 24 | 0.08 |
| Example 13 | 0.21 | 1.6 | 39597 | 26 | 0.15 |
| Example 14 | 0.27 | 1.3 | 39405 | 18 | 0.11 |

Referring to Table 7, it may be confirmed that, in Example 11, in which 20 wt% of rayon was used as a cellulose-based staple fiber, 40 wt% of soft pulp was used as a pulp fiber, and 40 wt% of LMPET was used as a thermoplastic resin fiber, a high tensile strength, elongation, and seal strength were shown and a porosity was also excellent.

While the embodiments are described with reference to the drawing, it will be apparent to one of ordinary skill in the art that various alterations and modifications in form and details may be made in these embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. An oral pouch packaging material comprising:
0% by weight (wt%) to 40 wt% of a cellulose-based staple fiber;
20 wt% to 80 wt% of a pulp fiber;
20 wt% to 60 wt% of a thermoplastic resin fiber; and
0 wt% to 5 wt% of a binder,
wherein the oral pouch packaging material is prepared by a wet method.

2. The oral pouch packaging material of claim 1, wherein the cellulose-based staple fiber comprises at least one selected from a group consisting of viscose and lyocell.

3. The oral pouch packaging material of claim 1, wherein the pulp fiber comprises at least one of a soft pulp or a hard pulp.

4. The oral pouch packaging material of claim 1, wherein the thermoplastic resin fiber comprises at least one selected from a group consisting of polypropylene (PP), polyethylene (PE), PE/PP, polyethylene terephthalate (PET), low-melting point polyethylene terephthalate (LMPET), and polylactic acid (PLA).

5. The oral pouch packaging material of claim 1, wherein
the thermoplastic resin fiber comprises a dual component fiber comprising two selected from a group consisting of PP, PE, PET, and PLA, and
the thermoplastic resin fiber forms a core-shell structure.

6. The oral pouch packaging material of claim 1, wherein the binder comprises at least one selected from a group consisting of an acrylic binder, PLA, polybutylene succinate (PBS), polyhydroxyalkanoates (PHA), a vinyl acetate copolymer, a vinyl acrylic copolymer, a styrenebutadiene copolymer, and a natural material derived from plants.

7. The oral pouch packaging material of claim 1, wherein the oral pouch packaging material has a tensile strength of 0.4 newtons per millimeter (N/mm) to 2 N/mm, an elongation of 1% to 10%, a porosity of 10,000 Cooperation Center for Scientific Research Relative to Tobacco (CORESTA) unit (CU) to 70,000 CU, and an airtightness of 0 milligrams (mg) to 60 mg.

8. The oral pouch packaging material of claim 1, wherein the oral pouch packaging material has a basis weight of 10 to 50 grams per square meter (g/m²) and a thickness of 50 micrometers (µm) to 300 µm.

9. The oral pouch packaging material of claim 1, wherein
the cellulose-based staple fiber is rayon and in an amount of 15 to 25 wt%,
the pulp fiber is soft pulp and in an amount of 35 to 45 wt%, and
the thermoplastic resin fiber is LMPET or PE/PP and in an amount of 35 to 45 wt%.

10. An oral pouch comprising the oral pouch packaging material of claim 1.

11. A method of preparing the oral pouch packaging material of claim 1, the method comprising:
step S1 of beating a pulp fiber;
step S2 of forming a web by mixing the beaten pulp fiber, a cellulose fiber, thermoplastic resin fiber; and
step S3 of performing dehydration and drying.

12. The method of claim 11, further comprising adding a binder.

13. The method of claim 12, wherein the adding of the binder is applied by size pressing during step S3, or applied by a coating method after step S3.
